(19)

Europäisches
Patentamt
European
Patent Office
Office européen
des brevets

(11) **EP 2 306 151 A1**

(12) **EUROPEAN PATENT APPLICATION**

(43) Date of publication:
06.04.2011 Bulletin 2011/14

(21) Application number: 10306070.3

(22) Date of filing: 01.10.2010

(51) Int Cl.:
*G01C 21/20* (2006.01)          *G01C 21/34* (2006.01)
*G01C 21/36* (2006.01)          *G06F 3/033* (2006.01)
*G06F 1/16* (2006.01)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**

(30) Priority: **01.10.2009 US 247544 P**

(71) Applicant: **France Telecom**
**75015 Paris (FR)**

(72) Inventors:
 • **Sierra, Mike**
   **CONCORD, MA MA 01742 (US)**
 • **Waters, Keith**
   **WEST NEWTON, MA MA 02465 (US)**

(74) Representative: **Windal-Vercasson, Gaelle I.M. et**
**al**
**France Telecom**
**R&D/PIV/BREVETS**
**38-40 rue du Général Leclerc**
**92794 Issy Moulineaux Cedex 9 (FR)**

(54) **Movement controlled point of interest rendering system and method of operation therof**

(57)      A method of displaying geographic information on a user interface (UI) of a mobile station (MS), the method including one or more acts of: determining a geographic location of the MS; calculating an orientation of the MS; determining a position vector of the MS and a shape of a display area based upon the orientation of the MS; obtaining map information corresponding with the geographic location of the MS; selecting map information which corresponds with the position vector and shape of the display area; and rendering the map information on the UI of the MS.

**Description**

FIELD OF THE PRESENT SYSTEM:

The present system relates to at least one of a system, method, user interface, and apparatus which can render map information based upon an orientation of a device and, more particularly, can select and thereafter render points of interest (POIs) based upon a geographic position and an orientation of the device.

BACKGROUND OF THE PRESENT SYSTEM:

As mobile devices such as cellular phones, personal digital assistants (PDAs), and the like have limited graphical user interfaces, it is difficult to render complex information such as maps, webpages, and the like with reasonable detail. Accordingly, when viewing information on a user interface of a mobile device, users must frequently change magnification of information displayed on a user interface of the mobile device so that certain information or data can be properly viewed. This process typically requires a user to manually manipulate an input device such as a mouse wheel, a keyboard, or a touch screen to change a magnification of information displayed on the user interface of the mobile device. Unfortunately, this may be difficult to do with a single hand and can inconvenience a user.

Accordingly, there is a need for a system and method which may selectively display specific information on a user interface of a mobile device based upon a geographic position, direction, and/or acceleration of the mobile device.

SUMMARY OF THE PRESENT SYSTEM:

It is an object of the present system to overcome disadvantages and/or make improvements in the prior art.

Accordingly, there is disclosed a mobile device, generally referred to herein as a mobile station (MS), which may sense a geographic location based on, for example, positioning information such as, latitude and/or longitude which may be obtained using a positioning service (e.g., from a mobile communication carrier using triangulation, assisted GPS (AGPS), etc.) or may be obtained using GPS sensor. The MS may also include one or more orientation sensors to determine an orientation of the MS. Suitable orientation sensors may include a magnetometer to sense a compass direction, and/or an accelerometer to sense an acceleration of the MS in one or more planes. The MS may obtain map information corresponding with a geographic location of the MS from a memory which may be locally or remotely located from the MS and use the orientation information to filter map information for display. The map information may include topographic information, street information, point of interest (POI) information, compass information, and the like. The POI information may be used to identify relevant nearby points of interest such as, for example, building, parks, addresses, and other commonly used POI information.

Accordingly, there is disclosed an MS which may conveniently display information such as map information on a user interface which may be adjusted based upon how the MS is pointed and/or moved. Further, the MS may receive information such as map information from a location-based service.

There is also disclosed a browser which may render information such as map information based upon geographic position of an MS and an orientation of the MS.

Accordingly, the present system provides a method of displaying geographic information on a user interface (UI) of a mobile station (MS), the method including one or more acts of: determining a geographic location of the MS; calculating an orientation of the MS; determining a position vector of the MS and a shape of a rendered display area based upon the orientation of the MS; obtaining map information corresponding with the geographic location of the MS; selecting map information which corresponds with the position vector and shape of the rendered display area; and rendering the map information on the UI of the MS.

The method may further include an act of selecting one or more points of interest (POIs) which correspond with the position vector and the shape of the geographic area. According to the method, the act of determining the orientation of the MS may include determining a pitch of the MS. Further, the act of determining an orientation of the MS may be based upon the magnetic orientation of the MS. Moreover, the method may include an act of selecting POIs within a geographic area of the MS and within an area corresponding with the rendered display area of the MS. Further, method may also disclose an act of changing the shape of the rendered display area based upon the orientation of the MS. Moreover, according to the method, the shape of the rendered display area may include a pie shaped area and may include one or more of inner and outer rings and a central angle.

It is a further object of the present system to disclose a system to display geographic information on a user interface (UI) of a mobile station (MS), the system may include a controller which: may determine a geographic location of the MS, calculate an orientation of MS, determine a position vector of the MS and a shape of a rendered display area based upon the orientation of the MS, obtain map information corresponding with the geographic location of the MS, and select map information which corresponds with the position vector and shape of the rendered display area; and a user interface (UI) which may render the map information on the UI of the MS. According to the system, the controller may select one or more points of interest (POIs) for rendering on the UI which correspond with the position vector and the shape of the geographic area.

The system may also include an accelerometer which may obtain acceleration information of the MS, wherein the controller may determine a pitch component of the orientation of the MS based upon the acceleration information. The system may further include a magnetometer which may obtain magnetic orientation information of the MS, wherein the controller may use the magnetic orientation information to determine at least part of the orientation of the MS. Further, the controller may select one or more POIs within a geographic area of the MS and within an area corresponding with the rendered display area of the MS for rendering on the UI of the MS.

Further, according to the system, the controller may change the shape of a rendered display area based upon the orientation of the MS. The system may also include a UI which may display a rendered display area including a pie shaped area having one or more of inner and outer rings and a central angle.

It is a further object of the present system to provide a computer program stored on a computer readable memory medium, the computer program configured to provide a user interface (UI) on a mobile station (MS) to accomplish a task, the computer program may include a program portion configured to: determine a geographic location of the MS; calculate an orientation of MS; determine a position vector of the MS and a shape of a rendered display area based upon the orientation of the MS; obtain map information corresponding with the geographic location of the MS; select map information which corresponds with the position vector and shape of the rendered display area; and render the map information on the UI of the MS.

The computer program portion may also be configured to select one or more points of interest (POIs) which correspond with the position vector and the shape of the geographic area. Further, the computer program may also include an accelerometer program portion which may be configured to obtain acceleration information of the MS, wherein the computer program portion may determine a pitch component of the orientation of the MS based upon the acceleration information.

According to the present system, there is also disclosed a magnetometer program portion which is configured to obtain magnetic orientation information of the MS, wherein the computer program portion may use the magnetic orientation information to determine at least part of the orientation of the MS. Further, the computer program portion may be configured to select POIs within a geographic area of the MS and within an area corresponding with the rendered display area of the MS.

BRIEF DESCRIPTION OF THE DRAWINGS:

The invention is explained in further detail, and by way of example, with reference to the accompanying drawings wherein:

FIGs. 1A, 1B show a UI 100 in accordance with an embodiment of the present system;
FIGs. 2A and 2B illustrate a method for determining a position of an area in accordance with an embodiment of the present system;
FIGs. 3A and 3B show a method for determining a shape of an area in accordance with an embodiment of the present system;
FIG. 4 shows a coordinate space of a MS in accordance with an embodiment of the present system.
FIGs. 5A and 5B show the compass's coordinate space for the relevant y and z axes of an MS, measured in degrees, in accordance with an embodiment of the present system;
FIG. 6A and 6B illustrate a system for determining a constraining area based upon an orientation of an MS in accordance with an embodiment of the present system;
FIG.7 shows a POI virtualization within a selected area according to an embodiment of the present system;
FIG.8 shows a sample interface of selected POIs for an arbitrary location bounded by an area A according to an embodiment of the present system;
FIG. 9 shows a flow diagram that illustrates a process in accordance with an embodiment of the present system;
FIG. 10 shows a flow diagram that illustrates a process in accordance with an embodiment of the present system;
FIG. 11 shows a flow diagram that illustrates a process in accordance with an embodiment of the present system;
FIG. 12 shows a flow diagram that illustrates a process in accordance with an embodiment of the present system; and
FIG. 13 shows a block diagram of a communication system according to an embodiment of the present system.

DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. For example, an operative coupling may include a wired and/or wireless coupling to enable communication between a server containing information regarding one or more points of interest (POIs) and one or more user devices, such as a mobile station (MS).

The term rendering and formatives thereof as utilized herein refer to providing content, such as user interfaces (e.g., graphical user interface (GUIs), etc.), POIs (e.g., as one or more of representations on a graphical map, as a list of one or more POIs, etc.), etc., such that it may be perceived by at least one user sense, such as a sense of sight and/or a sense of hearing. For example, the present system may render a user interface (UI) on a display device, such as a mobile station (MS) so that it may be seen and interacted with by a user. Further, the present system may render audio visual content on both of a device that renders audible output (e.g., a speaker, such as a loudspeaker) and a device that renders visual output (e.g., a display). The term rendering may also comprise all the actions required to generate a UI prior to the display, like e.g. sorting and selecting points of interest (POIs) to render on the GUI. To simplify the following discussion, the term content and formatives thereof will be utilized and should be understood to include audio content, visual content, audio visual content, textual content and/or other content types, unless a particular content type is specifically intended, as may be readily appreciated.

The system, device(s), method, user interface, etc., described herein address problems in prior art systems. An embodiment of the present system provides one or more of a system, method, device, computer program, and interface for rendering a UI related to POI for a users convenience. The UI may include one or more applications which are desired to complete an assigned task.

The user interaction with and manipulation of the computer environment is achieved using any of a variety of types of human-processor interface devices that are operationally coupled to the processor controlling the displayed environment. A common interface device for a user interface (UI), such as a graphical user interface (GUI) is a mouse, trackball, keyboard, touch-sensitive display, etc. For example, a trackball on a MS may be manipulated by a user to move a visual object, such as a cursor, depicted on a two-dimensional display surface in a direct mapping between the user manipulation and the depicted position of the cursor. This is typically known as position control, where the motion of the depicted object directly correlates to motion of the user manipulation. In accordance with the present system, the manipulation may also be in form of direct manipulation of the MS to affect what is rendered on the UI as will be discussed further herein.

An example of such a GUI in accordance with an embodiment of the present system is a GUI that may be provided by a computer program that may be user invoked, such as to enable a user to select and/or render POIs on a MS. To facilitate manipulation of the rendered GUI, the GUI may provide different views that are directed to different portions of the present process.

For example, the GUI may present a typical UI including a windowing environment and as such, may include menu items, pull-down menu items, pop-up windows, etc., that are typical of those provided in a windowing environment, such as may be represented within a Windows™ Operating System GUI as provided by Microsoft Corporation and/or an OS X™ Operating System GUI, such as provided on an iPhone™, MacBook™, iMac™, etc., as provided by Apple, Inc., and/or another operating system. The objects and sections of the GUI may be navigated by directly changing an orientation of the MS (as described further herein) or other user input device, such as trackball, finger, and/or other suitable user input. Further, the user input may be utilized for making selections within the GUI such as by selection of menu items, window items, radio buttons, pop-up windows, for example, in response to a mouse-over operation, and other common interaction paradigms as understood by a person of ordinary skill in the art and with regard to particular operations as manipulation of an orientation of the MS.

Similar interfaces may be provided by a device having a touch sensitive screen that is operated on by an input device such as a finger of a user or other input device such as a stylus. In this environment, a cursor may or may not be provided since location of selection is directly determined by the location of interaction with the touch sensitive screen. Although the GUI utilized for supporting touch sensitive inputs may be somewhat different than a GUI that is utilized for supporting, for example, a computer mouse input, however, for purposes of the present system, the operation is similar. Accordingly, for purposes of simplifying the foregoing description, the general interaction with the GUI discussed is intended to apply to either of these systems or others that may be suitably applied. In accordance with the present system, the particular information related to orienting the MS for manipulation of the GUI will be discussed in greater detail herein.

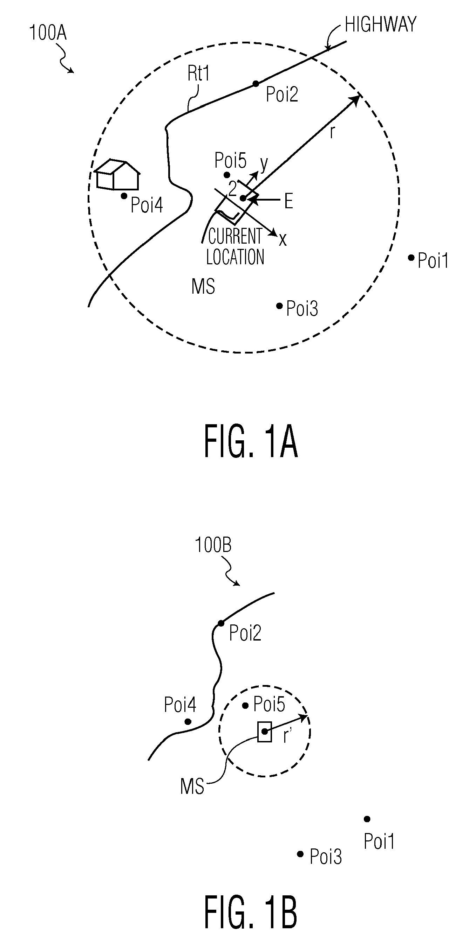

FIGs. 1-13 will be discussed below to facilitate a discussion of illustrative embodiments of the present system.

FIGs. 1A and 1B illustrate a system 100A, 100B and method for determining a constrained area (hereinafter area) for determining points of interest to render according to an embodiment of the present system. An MS may determine its geographic location as illustrated by location E and may obtain corresponding map information, such as points of interest (POIs, e.g., POI1, POI2, POI3, POI4, highway, RT1, etc.) and in accordance with the present system. In addition, an MS may determine a shape and/or a size of an area which may bound rendered map information and thereby, determine one or more POIs that may be rendered with a UI of the MS. In accordance with the present system, the shape and/or size of the area bounding POIs may change according to, for example, an orientation of the MS. Further, different types of areas may be selected such as, for example, round, square, hexagonal, pie shaped, cone shaped, etc. In the present example, the area may be selected as an area defined by a radius r which may be based upon an orientation of the MS. Certain map information such as, for example, POI information which is bound by the area may be selected and rendered by the MS based on an orientation of the MS. Similarly, information which is not bound by the area A may be ignored and thus, not be rendered y the UI of the MS.

For example, with reference to FIG. 1A, when an orientation of an axis, such as, for example, a z axis of the MS (herein also referred to as pitch) is determined to be parallel (or substantially parallel, such as +/- 5 or 10 degrees from parallel) to a plane such as, for example, a horizontal plane, the radius or other area defining variable may be set to a maximum value as illustrated by radius r. However with reference to FIG. 1B, when the orientation of the MS changes such that identical axis (e.g., the z axis) with respect to the same plane (e.g., the ground plane) are normal or close to normal (e.g., substantially normal, such as +/- 5 or 10 degrees from normal) to each other, the radius be minimized such as is illustrated by r'. Thus, in accordance with an embodiment of the present system, an area A' defined by the radius r' may have a similar shape to an area A defined by the radius r, however the area defined by r' may be smaller than the area defined by r. In this way, a size of an area rendered on a UI of an MS and/or utilized for filtering POIs rendered, may be based upon an orientation of the MS. Naturally, in another embodiment of the present system, the maximum radius may be achieved when the MS is held normal to the horizontal plane while the minimum radius may be achieved when the MS is held parallel to the horizontal plane and the operation of the adjustment to the radius and/or shape (as discussed further herein) of the area may be user selectable, such as by user selection of a corresponding menu option with the UI as may be readily appreciated.

Although the shape of the areas A and A' are bound by a circle defined by r or r' respectively, other functions such as, for example, linear and/or non-linear functions may be used in another embodiment of the present system to define an area. Thus, in accordance with an embodiment of the present system, an area rendered on a UI of the MS may be defined as function of an orientation of the MS. This may be more clearly illustrated with reference to Equation 1 below.

$$A_r = f(O_r) \qquad \qquad ...Eq.\ 1.$$

With reference to Equation 1, $A_r$ defines an area as a function of an orientation Or.

Further, in accordance with another embodiment of the present system, the areas rendered by the UI may also be defined by ranges. Thus, for example, when an orientation of an axis, such as, for example, a z axis of the MS is determined to be within a range of +/- 10 degrees (where 0 degrees may be considered parallel) relative to a plane such as, for example, a horizontal plane, the radius or other area defining variable may be set to a first value (e.g., a maximum value). Similarly, when, for example, an orientation of an axis, such as, for example, a z axis of the MS is determined to be within a range of 35-55 degrees (where 90 degrees may be considered normal) relative to a plane such as, for example, a horizontal plane, the radius or other area defining variable may be set to a second value (e.g., a mid value) such that a radius r (at the maximum value) is greater than a radius r" at the mid value. Thus, r may be non linear and may have discrete values, such that r>r">r'.

In either event, as shown by FIG. 1A when the radius r is defined as a maximum value, POIs, such as POI2, POI3, POI4, and POI 5 may be viewable (e.g., based on the orientation of the MS) within the UI of the MS, while the POI1 is notis not viewable since it is outside of the radius r. In addition, by changing a pitch of the MS and thereby reducing the radius to r' as shown in FIG. 1B, the radius r' may be defined as a minimum value and POIs, such as POI 5 may be viewable (e.g., based on the orientation of the MS) within the UI of the MS, while the POI1, POI2, POI3 and POI4 are not viewable since each is outside of the radius r'.

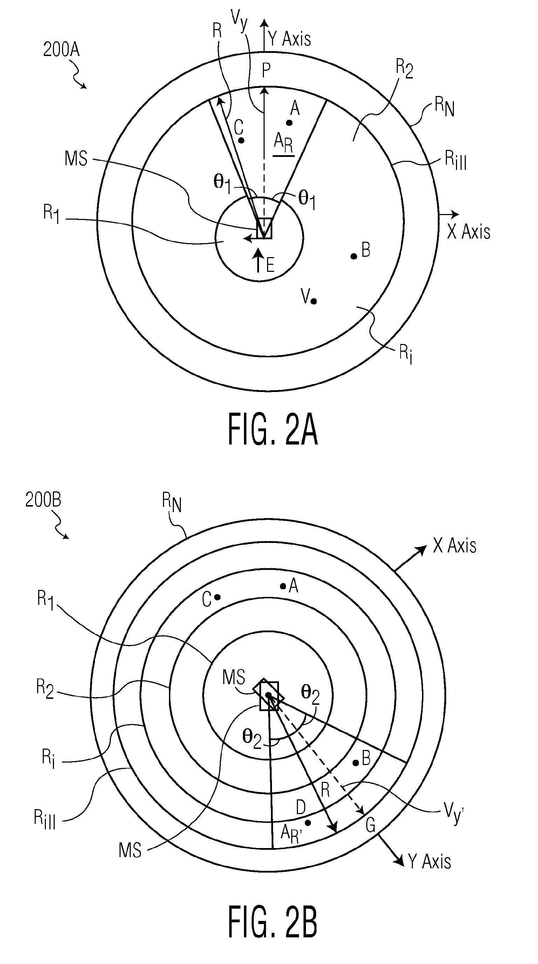

FIGs. 2A and 2B illustrate a method for determining a position of an area in accordance with an embodiment of the present system. With reference to FIG. 2A, an MS is shown at a location E. With reference to FIG. 2A, an orientation of the MS may control both a size and a shape of an area $A_R$ which bounds POIs A and C. As shown, POIs B and D may lie outside of this area. In accordance with this embodiment, the MS may determine its orientation with respect to three axes such as, for example, an x, y, and z, axes and may change size and/or shape of an area $A_R$ based upon a determination of the orientation of the MS. For the sake of clarity, it will be assumed that the z orientation (i.e., the pitch) of the MSs in both of FIGs. 2A and 2B is the same. However, the MSs in FIGs. 2A and 2B have different bearings (i.e., yaw) such that the MS in FIG. 2A has a y axis or bearing that is oriented in the same direction as a position vector $V_y$ and the MS in FIG. 2B has a y axis or bearing that is oriented in a same direction as position vector $V_y'$. Accordingly, with reference to FIG. 2A, the system may adjust an orientation with reference to rendered map information such that the area $A_R$ rendered on a UI of the MS is defined about the position vector $V_y$ and, for example, has pie shaped radial extensions which define an angle $\theta_1$ with respect to the position vector $V_y$. With respect to FIG. 2B, in a similar fashion, the system may adjust an orientation with reference to map information such that the area $A_R'$ is defined about the position vector $V_y'$ and has pie shaped radial extensions which define an angle $\theta_2$ with respect to the position vector $V_y'$.

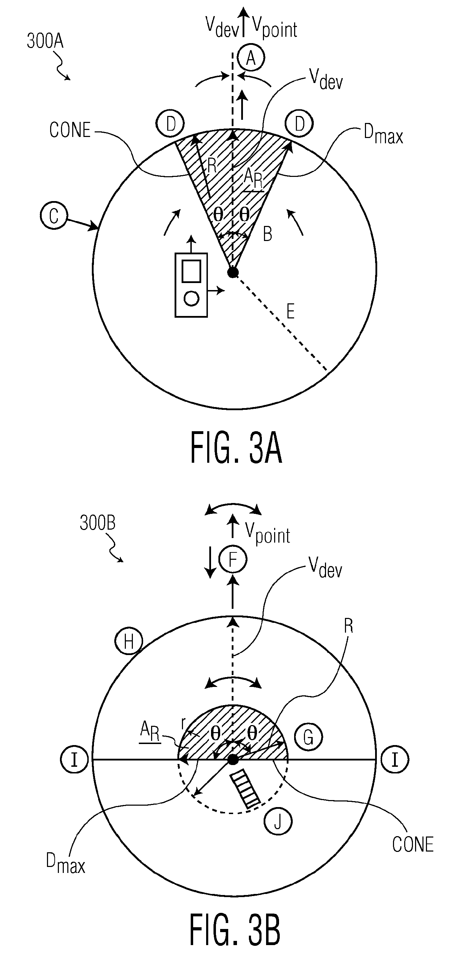

In accordance with a further embodiment of the present system, one or more rings $R_1$ through $R_N$ may define inner and/or outer boundaries of the areas $A_R$ and $A_R'$ as will be described below with respect to FIGs. 3A and 3B. Further, when the MS is oriented as shown in FIG. 2A, POIs A and C may be selected as POIs which are within a corresponding area (e.g., area $A_R$), and thereby are rendered on the UI of the MS. Similarly, when the MS is oriented as shown in FIG. 2B, POIs B and D may be selected as POIs which are within a corresponding area (e.g., area $A_R'$), and thereby are rendered on the UI of the MS.

Thus, FIGs. 2A and 2B illustrate how reorienting the bearing of the device (which may be detected using any suitable method such as, for example, compass data) constrains the POIs that may be rendered by the area (e.g., areas $A_R$ and $A_R'$). Accordingly, all POIs within the rendered area (e.g., cone) may be selected to be rendered in accordance with an embodiment of the present system. As may be readily appreciated, since the pitch of the MSs in both FIGs. 2A and 2B is the same or is substantially the same, the angles $\theta$ and $\theta'$ of FIGs. 2A and 2B, respectively, are also the same as will be described below.

FIGs. 3A and 3B illustrates a method for determining a shape of an area rendered on the UI (e.g., UIs 300A, 300B) of the MS in accordance with an embodiment of the present system. With reference to FIGs 3A and 3B, it is assumed that only the pitch of MS changes from FIG. 3A to FIG. 3B. Thus, FIGs. 3A and 3B illustrate how reorienting a pitch of the MS may change a shape of a constraining area $A_R$ and may, thus, affect a set of POIs which are rendered within the constraining area $A_r$. With reference to FIG. 3A, when the device is oriented level or substantially level to a horizontal position relative to, for example, a horizontal axis, such as the Earth's horizon, the angle $\theta$ around a target vector $V_{dev}$ may form a relatively narrow cone as defined by the radii D-D, although in this embodiment, the radius R may define a maximum distance that is equal to that of a circular region C. With reference to FIG. 3B, when the MS is raised to a vertical position relative to the same plane (i.e., the Earth's horizon), the angle $\theta$ around the target vector $V_{dev}$ may increase while the radius R decreases. In this way, the cone rendered on the UI of the MS may expand such that its center angle is, for example, 180 degrees as defined by the radii I-I. However, in accordance with this embodiment, the radius R may be shortened from the radius R depicted in FIG. 3A.

In accordance with this embodiment of the present system, by adjusting the angle $\theta$ around the target vector Vdev, the shape of constraining the area $A_R$ rendered on the UI of the MS, which in this illustrative embodiment is shown as having a cone-shape, may be changed in both size and shape by a change in the pitch of the MS. In this way, when the radius is defined as a larger radius, the angle around the target vector $V_{dev}$ may be reduced, to reduce the number of POIs available for rendering within the UI to a manageable number. Conversely, when the radius is defined as a smaller radius, the angle around the target vector Vdev may be increased, to maintain a given number of POIs (e.g., a user selectable number of minimum POIs to render) available for rendering within the UI. Naturally, as described above, in another embodiment of the present system, the angle around the target vector $V_{dev}$ may be fixed to enable a focus on given POIs (e.g., rending with greater detail given POIs or merely an elimination of other POIs not encompassed by the adjusted area) within the UI when increasing the pitch of the MS.

In accordance with an embodiment of the present system, the angle around the target vector $V_{dev}$ may vary based on an angle of the MS with regard to the y axis (e.g., roll of the MS), for example, with a larger roll of the MS resulting in, for example, a larger angle around the target vector $V_{dev}$. In yet another embodiment of the present system, the angle around the target vector $V_{dev}$ may vary for a given pitch of the MS based on the number of POIs that are encompassed by a given angle. For example, in a case wherein the MS is an area where there are numerous POIs, the angle around the target vector $V_{dev}$ may be reduced for a given pitch of the MS as compared to an instance wherein the MS is at a location where there are relatively fewer POIs for the given pitch of the MS.

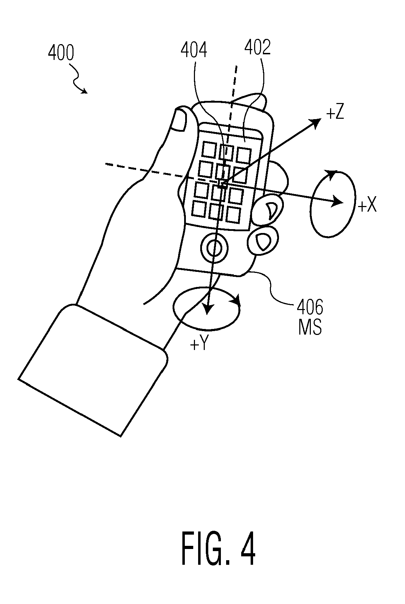

FIG. 4 shows a coordinate space 400 of an MS in accordance with an embodiment of the present system. An MS 406 may include one or more of a user interface 402 and an orientation detector 404, such as one or more of an accelerometer, compass, magnetometer, global positioning system (GPS), etc. The MS may be considered as having one or more axes such as, for example, x, y, and z axes which are shown for illustration and may correspond with axes of the orientation detector 404 which may include three axes having x, y, and z axis portions. In one embodiment of the present system, a magnetometer (e.g., an electronic compass) may be used together with or in place of an accelerometer to determine a bearing of the MS in relation to a magnetic field such as, for example, magnetic north. The orientation detector 404 may measure in any suitable measurement system such as, for example, units of gravity as well as any suitable coordinate system, such as Cartesian or polar coordinate systems.

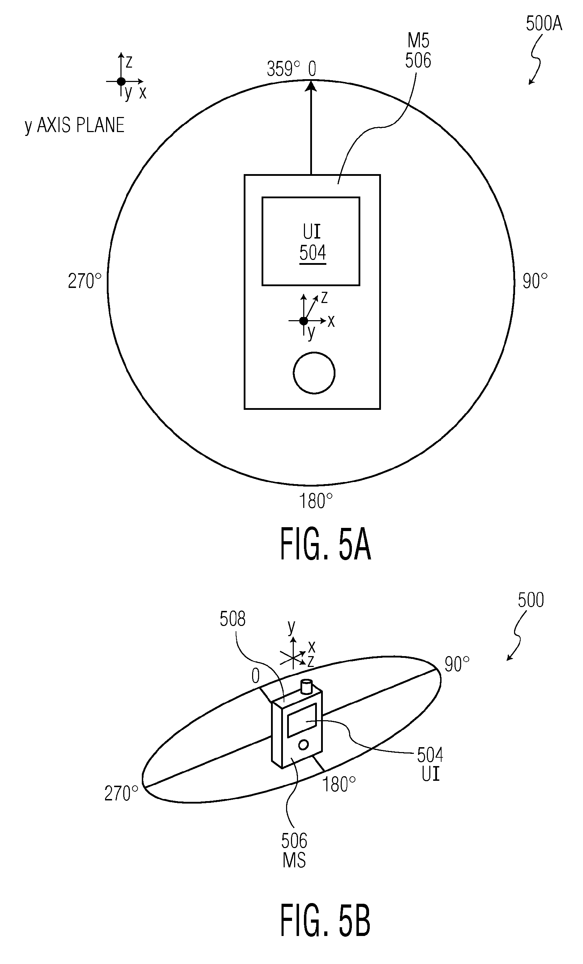

FIGs. 5A and 5B show the compass's coordinate space for the relevant y and z axes of an MS, measured in degrees, in accordance with an embodiment of the present system. With reference to FIG. 5A, when an MS 506 is oriented parallel to a horizontal plane (e.g., in a face up manner with reference to FIG. 5A), the MS 506 may rely upon readings along a y-axis of an orientation detector, such as a compass, to determine a bearing of the MS 506. With reference to FIG. 5B, when the MS 506 is oriented perpendicular to the horizontal plane (e.g., with a top edge 508 pointing away from the horizontal plane), the MS 506 may rely upon readings along a z-axis of the compass to determine a bearing of the MS 506. In the illustrative embodiment shown in FIG. 5B, the x axis runs along a line of the 90 to 270 degree marks.

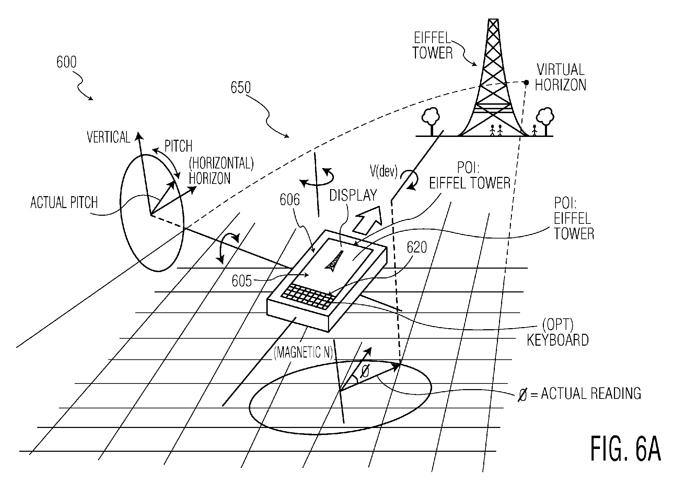

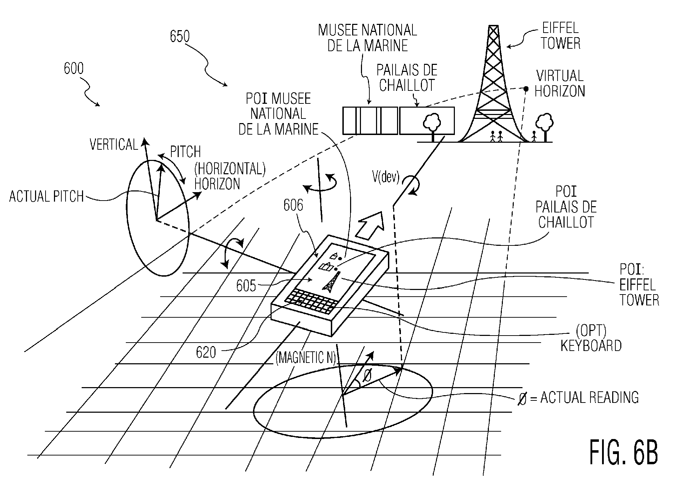

FIGs. 6A, 6B illustrate a system 600 for determining a constraining area based upon an orientation of an MS in accordance with an embodiment of the present system. As shown, a field of view 650 is shown around an MS 606. The MS 606 includes a display 605 and a keyboard 620 for user interaction (e.g., option selection) with a UI rendered on the display 605. In the embodiment shown in FIG. 6A, the field of view of the UI is minimized as the MS 606 approaches a horizontal pitch, and thus, the field of view 650 is reduced to include a single POI, illustratively shown as the Eiffel Tower, within the field of view 650 and as rendered on the UI of the MS 606. As shown in FIG. 6B, the field of view of the UI is maximized as the MS 606 approaches a vertical pitch that is normal to the horizontal pitch, and thus, the field of view 650 is increased to include multiple POIs, illustratively shown as the Eiffel Tower, the Musse National de la Marine and the Palais de Challiot, within the field of view 650 and as rendered on the UI of the MS 606.

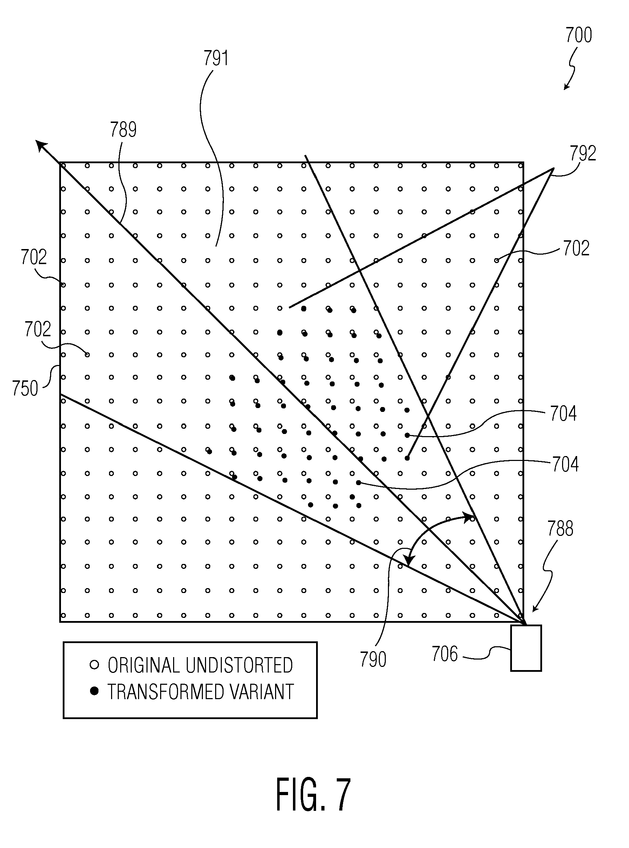

FIG. 7 shows a POI virtualization within a selected area 700 according to an embodiment of the present system. Hollow circles 702 correspond with original and/or undistorted locations; and solid circles 704 correspond with transformed variants. In accordance with an embodiment of the present system, FIG. 7 represents a latitude/longitude space as a 2D grid 750. As illustrated, an MS 706 is positioned at the bottom right corner 788 of the grid 750. A pointer vector 789 of the MS 706 extends to the top left of the grid 750. In this illustrative example, an angle (790) around the vector defines a cone-shaped area (791) within which are a set of POIs (792). As may appreciated by a review of FIG. 7, the figure illustrates how, in accordance with an embodiment of the present system, a nonlinear transformation may displace POIs the more proximate they are to the MS's pointer vector, boosting their relevance when presenting POIs in a final UI.

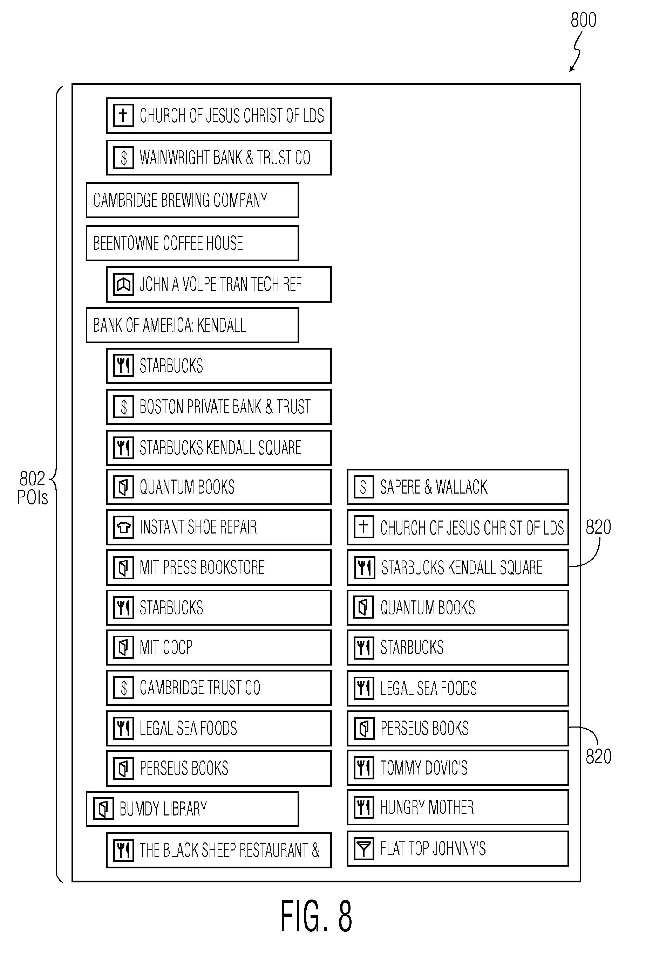

FIG. 8 shows a sample UI 800 of selected POIs for a location bounded by an area A according to an embodiment of the present system. In this embodiment, the POIs are presented as a list of POIs. The POIs 802 correspond with POIs which are bound within an area such as an area A according to the present system. As a user changes bearing, the POIs bounded by the area A change from the POIs 802 to the POIs 820.

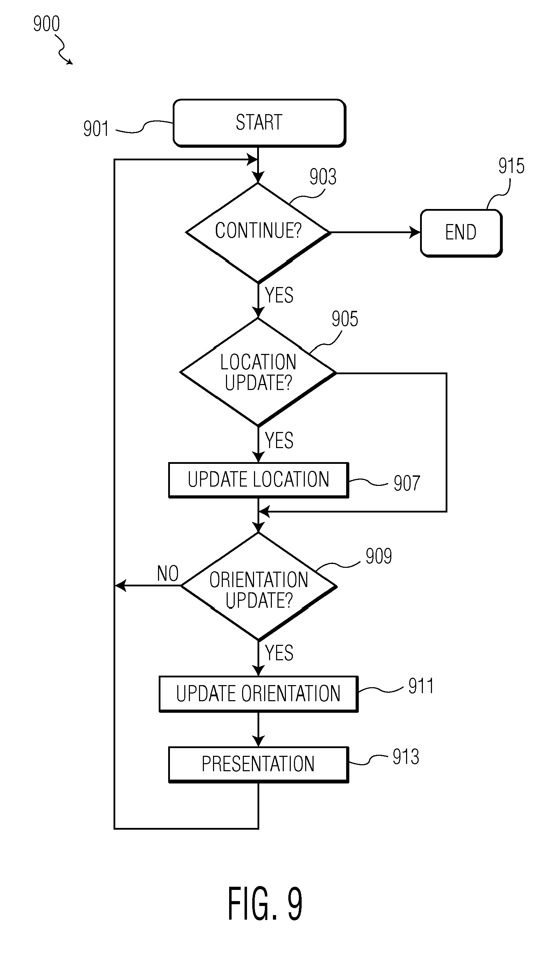

Embodiments of several processes of the present system will now described below with reference to FIGs. 9 through 12. These processes may be implemented using any suitable method such as, for example, using an EcmaScript (aka JavaScript). One or more of the process may extract data from device sensors (e.g., accelerometer, compass, GPS, UI, etc.), for example, via an executable C code program portion, that may conform to a suitable standard such as, for example, the W3C's Delivery Context: Client Interfaces (DCCI) specification. However, other methods to obtain and/or process data such as sensor data are also envisioned in accordance with the present system.

FIG. 9 illustrates a flow diagram of a process 900 in accordance with an embodiment of the present system. The process 900 may be performed using one or more processors that are suitably programmed with program portions to become a special purpose processor, for example communicating over a network with a server that stores POIs and related information. The process 900 can include one of more of the following acts. The process 900 may run, for example, as an application within a continuous loop which may be interrupted by the system and/or the user. In one embodiment, the process may be performed by an application such as, for example, an EcmaScript (aka JavaScript) application and may extract information from device sensors via, for example, executable C code that may conform to the W3C's DCCI specification. However, any suitable information retrieving method (e.g., hardware, software, etc.) may be used.

In operation, the process may start during act 901 and then proceed to act 903. During act 903, it may be determined whether the process should continue, for example, based on a user response to an inquiry whether or not to continue. If it is determined that the process should continue, the process may continue to act 905. Conversely, If it is determined that the process should not continue, the process may continue to act 915, where the process ends. Thus, if a user determines to exit the application, which may occur at any time, the process may end. However, in accordance with an embodiment of the present system, in the absence of a user's request to end the process, the process may continue. In accordance with an embodiment of the present system, the process may also be aborted by other applications. For example, a power (e.g., battery life) application or timer application may end the process when one or more events occur, such as low battery indication of the MS, after a predetermined time period, such as 1 hour, in response to a detected inactivity of the MS (e.g., no change in orientation of the MS), etc., to conserve system resources.

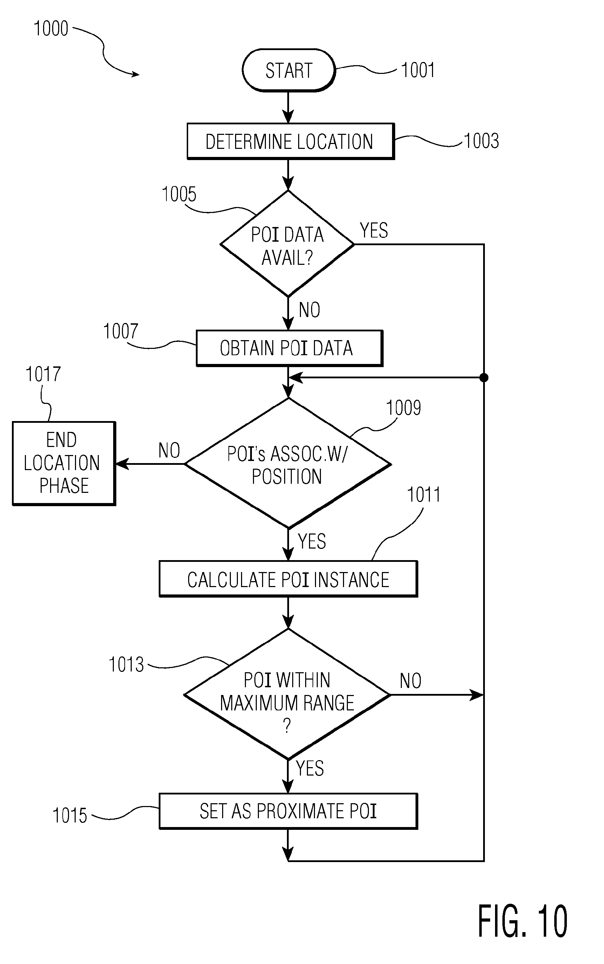

During act 905, the process may determine whether to update location data, for example in response to detecting that a location of the MS has changed from a previously detected location (e.g., an immediately previous location prior to the current location). In a case wherein it is detected that the location of the MS has changed, the process may continue to an update location phase during act 907, shown in greater detail with reference to FIG. 10. During execution, the process may update its location data (e.g., perform the act 907) at periodic or other predetermined times. For example, the location data may be updated when certain events occur (e.g., after a certain acceleration and/or time elapse, such as periodically, etc.), etc.

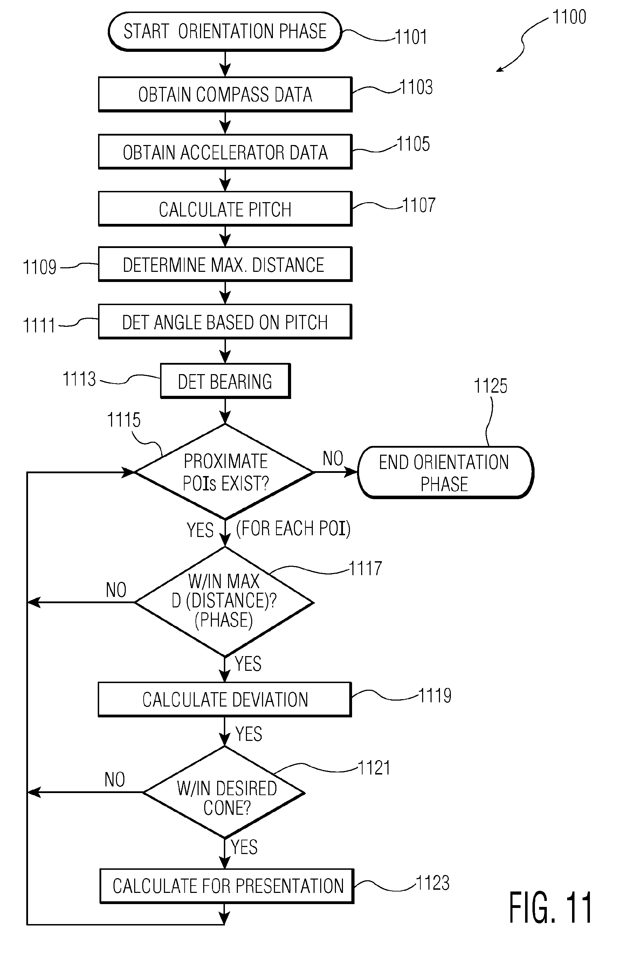

During act 907, the process may update its location data. The location data may be updated using any suitable method such as, for example, triangulation, GPS and/or assisted GPS (AGPS). Some or all of the location data may be transmitted to an MS from a mobile service provider or may be calculated by the MS. The process may also select a method to select location data e.g., obtaining the information from a GPS satellites or from a mobile provider, to conserve system resources. After completing act 907, the process may continue to act 909. Further, in a case wherein it is detected that the location of the MS has not changed (e.g., NO determination during the act 905), the process may continue to an update orientation phase during act 909, shown in greater detail with reference to FIG. 11. In a case wherein it is determined that the orientation of the MS has not changed (e.g., a NO determination during the act 909), the process may repeat the acts described herein starting with the act 903.

While the above checking/updating location and checking/updating orientation is shown in FIG. 9 as being performed in a loop wherein first the location is checked and thereafter the orientation is checked, this sequence is merely provide to facilitate a review of the present system and is not intended as a limitation of the present system. For example, with regard to checking/updating orientation data, in accordance with an embodiment of the present system, the process may update orientation data at periodic or predetermined times which may occur more frequently than the checking/updating of the location data. In accordance with an embodiment of the present system, each may occur independently of the other, for example, based on separate predetermined time functions associated with each process. Thus, system resources such as, for example, battery life, network bandwidth, etc. may be conserved, while enabling a detection of a change in orientation quicker than a detection of a change in location since it is likely, that a change in orientation of the MS will occur more frequently than a change in location of the MS.

While the update of orientation data and location data may occur at different times or may occur at independent times, they may also be timed such that they occur at similar or otherwise related times. Thus, for example, in an EcmaScript embodiment in which a continuous setInterval() timer function may update location data relatively infrequently, while another continuous setInterval() timer function may frequently update orientation data. In another embodiment of the present system, these two functions may operate asynchronously and independently of each other, as desired.

In a case wherein it is detected that the orientation of the MS has changed, the process may continue to an update orientation phase during act 910, shown in greater detail with reference to FIG. 11. During act 910, the process may update orientation data. Thus, the process may obtain orientation data using any suitable method. For example, the process may receive information one or more orientation detectors (e.g., a compass, accelerometer, etc.) to determine its orientation relative to a magnetic field such as, for example, magnetic north and down relative to the Earth. Based upon information received from the orientation detector(s), the process may calculate orientation using different axes. In accordance with the present system, the MS may utilize a 2D indication (e.g., Y/Z axis, such as a magnetometer arranged as a 2D compass) to calculate bearing regardless of orientation. For example, when an MS is held horizontally in relation to a plane, (e.g., the MS's top edge points to the horizon), the MS may utilize its Y axis reading to determine bearing. However, if the MS is pointing up, the MS may utilize its Z axis. This orientation may be reversed for a bearing indicator in a form of an accelerometer which produces a bearing relative to earth's gravitational pull. The process may also receive information from one or more one to three axis accelerometers and may use this information to determine orientation of a device, such as the MS. Thus, the results of the location data and orientation data may define a devices current location and orientation, respectively. After completing act 910, the process may continue to act 913.

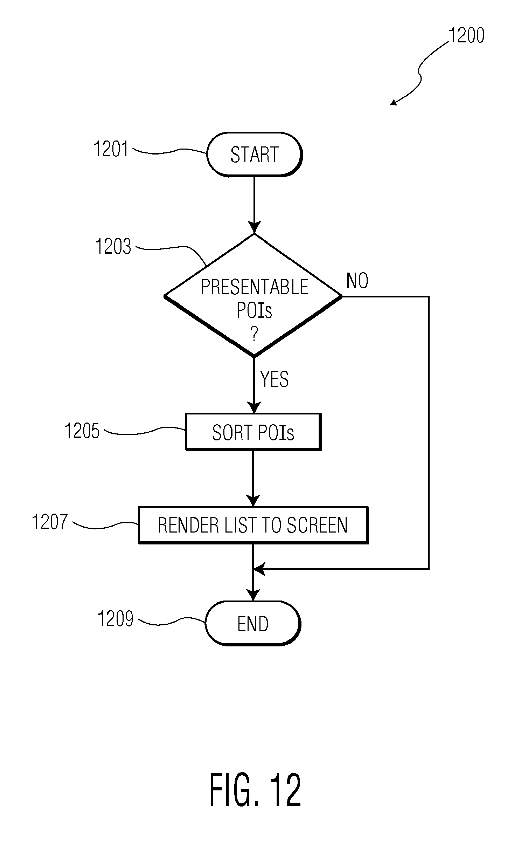

During act 913, the process may analyze the location and orientation data and determine corresponding map information which may be rendered on a UI of a device as described herein in more detail with reference to FIG. 12. After completing act 913, the process may repeat act 903 as described above.

With respect to the process 900, it may include, for example, three phases of execution while it is running. These phases may include, for example, location, orientation, and virtualization, which is respectively described with reference to the illustrative processes respectively shown in FIGs. 10, 11 and 12. However, the present system is not be construed as limited these processes as alternated processes for enacting these phases are also within the scope of the present system.

FIG. 10 shows a flow diagram that illustrates a process 1000 in accordance with an embodiment of the present system. The process 1000 illustrates a method to determine a location of the MS when the location of the MS is updated (e.g., see, FIG. 9, the act 907). Process 1000 may be performed using one or more computers communicating over a network. The process may require a device (e.g., the MS) to store information about its location for use by the process. This information may be stored in, for example, a memory of the device. Further, the process may obtain updated data from a location sensor (e.g., a GPS sensor) of the device to update and/or to reestablish the device's geographic position. A frequency at which this geographic position data may be updated may depend upon, *inter alia,* one or more of an expected velocity of the device, a distance between the device and surrounding points of interest, and/or combinations thereof. The process 1000 can include one of more of the following acts. Further, one or more of these acts may be combined and/or separated into sub-acts, if desired. In operation, the process may start during act 1001 and may proceed to act 1003.

During act 1003, the device may calculate location using any suitable method (e.g., GPS, triangulation, etc.). For example, the process may calculate location by obtaining location information from a position sensor such as, for example, a GPS sensor. The process may parse the location information to extract numeric latitude/longitude values. These values may be used to represent the device's current geographic location. After completing act 1003, the process may continue to act 1005.

During act 1005, the process may determine if POI data is available. The POI data may be stored in a memory of the device either locally or remotely. In a case wherein it is determined that POI data is available (e.g., YES determination during the act 1005), the process may continue to act 1009. However, if the process determines that POI data is not available, the process may continue to act 1007.

During act 1007, the process may obtain POI data using any suitable method. For example, the process may populate a set of POI data by, for example, sending an HTTP request to a service in a form specifying the device's current location. The service may then return data that can be parsed to produce a set of POIs with corresponding latitude and/or longitude (LAT/LON) coordinates. The process of extracting this data may involve an extra reverse geocoding step. For example, a LAT/LON coordinates may be transmitted to a reverse geocoding service that returns a zip code. The zip code, in turn, may then be transmitted to a service that provides the POI data. The services may be locally and/or remotely located. For example, one or more of these services may be provided by, for example, a mobile service provider, an Internet based provider, etc. The provided POIs data may represent a widest possible scope of useful data and may take into account potential shifts in location of the mobile device. For example, the pool of available POIs may comprise the area of an entire city, for example, if the user may be expected to travel from one side of the city to the other. In another embodiment of the present system, the range of the POIs requested from the service that provides the POI data may be user selectable.

In the present example, a wide range of POI data may be requested only once (e.g., when the process or application initially executes). Alternately, it is also envisioned that POI data may be requested each time the device's location is updated, or at any other time during execution of the process (e.g., periodically). For example, the amount of POI data requested/transferred to the MS may be constrained by the amount of data storage available on the MS. For the sake of simplicity, the present example assumes that a sufficiently wide range of data is initially available to account for an expected shift in location by a device in which the process may operate (e.g., all POIs for a given city). After completing act 1007, the process may continue to act 1009.

During act 1009, the process may determine whether there are any POIs associated with the current geographic location. Thus, if the process determines that there are POIs associated with the current geographic location, it may continue to act 1011. However, if the process determines that there are no POIs associated with the current geographic location, the process may continue to act 1017 where it may end. Thus, if the process determines that a device is in a location with no POIs (e.g., in the middle of the Sahara desert), the process may exit the location process.

During act 1011, in a case wherein it is determined that there are POIs associated with the current location (e.g., YES determination during act 1009), the process may separately calculate the distance of each POI from the MSs current location (e.g., perform the act 1011 for each POI). The process may calculate this distance using any suitable method. For example, the process may use the haversine formula to calculate distances between each POI and a current geographic location of the MS. However, since the haversine formula merely describes simple "as the crow flies" distance, a more complex embodiment of the present system may rely on real-world travel distances. For example, for a POI that is located on the other side of a natural barrier, such as a harbor, may be excluded from consideration despite its physical proximity because of the much greater distance required to travel there.

In any event, after completing act 1011, the process may continue to act 1013.

During act 1013, the process may determine whether one of the POIs is located within a predetermined distance (e.g., a circle having a radius equal to a radius r that may be fixed or may be defined by the pitch of the MS as discussed above) of a current geographic location of the device. Accordingly, if the process determines that a POI is located within the predetermined distance of the current geographic location of the device, the process may continue to act 1015. However, if the process determines that a POI is not located within a predetermined distance of the current geographic location of the device, the POI may be discarded and the process may perform acts 1009, 1011 and 1013 for a next POI.

During act 1015, the process may set a corresponding POI as a proximate POI. Thus, proximate POIs are POIs which are located within the predetermined distance r of the current geographic location of the device. After completing act 1015, the process may perform acts 1009, 1011 and 1013 for a next POI.

The processes performed during acts 1013 through 1015 are used to distinguish POIs which fall within a predetermined distance (i.e., range or circle) from the MS, from POIs which do not fall within the predetermined distance from the MS. Accordingly, POIs which are not located within the predetermined distance of the current geographic location of the MS (e.g., POIs which are outside of a circle around the MS) may be considered to be irrelevant with regard to the current location of the MS while POIs which are located within the predetermined distance may be tabulated as proximate POIs. Further, the predetermined distance may be based upon the orientation (e.g., pitch) of the MS as will be described below with reference to the process of FIG. 11. Thus, referring back to act 1011, the process may differentiate POIs which fall within the predetermined range (i.e., POIs which are within the circle) from POIs which are determined to lie outside of the range (i.e., POIs which lie outside of the circle).

FIG. 11 shows a flow diagram that illustrates a process 1100 in accordance with an embodiment of the present system. The process 1100 may be referred to as an orientation phase process in which a device's bearing relative to, for example, the Earth's magnetic north and an orientation relative to the Earth's horizon may be determined (e.g., see, FIG. 9, the act 910). The process 1100 and may be performed using one or more computers communicating over a network. The process 1100 can include one of more of the following acts. Further, one or more of these acts may be combined and/or separated into sub-acts, if desired. The process may store information about a bearing of a device relative to a magnetic field such as, for example, the Earth's magnetic poles, and the device's orientation relative to the Earth's gravitational pull. The process 1110 may execute more frequently than the process 1000 (i.e., the location phase process) so that rapid gestures and other movements of the device may be determined and processed accordingly. In operation, the process may start during act 1101 and then proceed to act 1103.

During act 1103, the process may obtain magnetic data corresponding with one or more axes (e.g., x, y, and/or z axes which may correspond with the x, y, and/or z axes, respectively, of the MS) of one or more orientation detection devices coupled to the MS, such as a compass, etc. This data may be considered compass data. After completing act 1103, the process may continue to act 1105.

During act 1105, the process may obtain acceleration data corresponding with one or more axes (e.g., x, y, and/or z axes which may correspond with the x, y, and/or z axes, respectively, of the MS) of one or more orientation detection devices coupled to the MS, such as an accelerometer. This data may be considered acceleration data. After completing act 1105, the process may continue to act 1107.

During act 1107, the process may determine a pitch of the MS using data from the accelerometer. As used herein, the pitch may refer to whether the MS's top edge is pointing towards the horizon (e.g., of the Earth), or straight up towards the sky. In the former case, accelerometer values may be [0,0,-1]; in the latter case the accelerometer values may be [0,1,0]. The $y$ value is second in an x/y/z array and may be used to represent the MS's pitch. The accelerometer data may be used to determine an overall orientation of the MS. Using this information, the process may determine an axis of the compass which may provide the most reliable signal information that may be used to determine a device bearing. After completing act 1107, the process may continue to act 1109.

During act 1109, the process may determine a maximum distance $D_{max}$ (e.g., see, FIG. 3A) which correspond with the predetermined distance. This maximum distance $D_{max}$ may be used to define at least part of a constraining area for use in selecting proximate POIs (e.g., see, FIG. 10). Thus, the device's pitch may be used to constrain or expand a radius of the circle around the device. For example, to the extent the MS top edge points to the horizon (i.e., when the MS is substantially horizontal relative to a ground plane of the Earth), the circle may expand to a maximum desired range, perhaps 2 miles. To the extent that the top edge of the MS points upwards towards the sky (i.e., when the MS is substantially perpendicular to the ground pane), the MS may reduce the radius to a minimum desired range of, for example, .5 miles. However, the desired ranges may also be based upon a user's or the MS's setting.

Following the act 1109, the process continues to act 1111, wherein an angle θ is determined. With reference to the act 1111 and FIGs. 3A and 3B, it may be assumed that a target vector $V_{dev}$ (which may correspond with $V_y$) may form a pointer which emanates from the top of the MS. The MS's pitch may constrain or expand a desired angle θ deviating from the pointer's vector within one or more circles which may define a part of an area. This angle may define a cone that falls within at least part of the circle. To the extent that the MS's top edge points to the horizon, the cone's total angle might be a narrow 30 degrees and thus θ may be 15 degrees, for example as shown with reference to FIG. 3A. To the extent the top edge of the MS points upwards, the cone total angle may expand to, for example, 180 degrees and thus θ may be 90 degrees as shown in FIG. 3B. Thus, pointing the MS towards the horizon yields a narrower but more distant set of POIs, while pointing it up yields a wider but closer set of POIs. After completing act 1111, the process may continue to act 1113. The angle θ may be incremented in a linear fashion or may be incremented in discrete units (e.g., in 10 degree increments, etc.), as desired (e.g., as set by a user selectable option of the MS).

During act 1113, the process may determine a bearing of the device relative to a plane such as, for example, the Earth's ground plane or horizon. The process may determine the device's bearing along the horizon, or pointer vector $V_{point}$ (e.g., see, FIGs. 3A, 3B) using any suitable method. For example, the device may calculate the device's bearing using data obtained from the magnetometer, such as a compass. Further, the process may use information related to the device's pitch to determine a most accurate axis of the magnetometer to use. For example, the process determines that the absolute value of the MS's pitch is greater than or equal to 0.5 G (units of gravity) along the accelerometer's Y axis, the process may select information corresponding with the z axis of the magnetometer to be used to determine a bearing as this axis may be assumed to provide a most reliable signal. However, if the process determines that the MS's pitch is less than 0.5, the process may select information corresponding with the y axis of the magnetometer to be used to determine a bearing of the device as this axis may be assumed to be the strongest and thus, provide a most reliable signal within this range.

For example, assuming a bearing sensor of the MS (e.g., a compass) returns values in degree terms of 0-359, representing the MS's current bearing within absolute latitude/longitude space. The degree bearing for each POI's latitude/longitude may be calculated relative to the MS's current latitude/longitude, such as described in an article intitled "Aviation Formulary v1.44", by Ed Williams, available through the Internet at Hypertext Transfer Protocol location "j.mp/ 1467gd", incorporated herein by reference thereto.

To calculate deviation in degree terms (-180 to 180), you may subtract the MS's bearing from the POI's bearing. If the resulting value is less than -180 (i.e., more than a half-rotation to the left), you may subtract the sum of the two bearings from 360. If the result is greater than 180, you may subtract the sum of the two bearings from 360, then multiply by -1. In accordance with an embodiment of the present system, this deviation may then be compared against half the total angle that defines the selected cone.

In any event, after completing act 1113, the process may continue to act 1115.

During act 1115, the process may determine whether proximate POIs exist (e.g., see, FIG. 10, act 1015) for the current location. Accordingly, if the process determines that proximate POIs exist, the process may continue to act 1117. However, if the process determines that proximate POIs do not exist, the process may continue to act 1125 where the orientation phase may end.

During act 1117, in a case wherein it is determined that proximate POIs exist during the act 1115, the process may determine whether a current POI's location is within the maximum distance $D_{max}$ from the MS (or radius corresponding with the range $R_{range}$) which was determined during act 1109. The process may do this by determining whether the distance of a current POI from the MS is less than or equal to the maximum distance $D_{max}$ and thus, is within the range $R_{range}$ of the device. Accordingly, if the process determines that a current POI's location is within the maximum distance $D_{max}$, the process may continue to act 1119. However, if the process determines that a current POI's location is not within the maximum distance $D_{max}$, the process may repeat act 1125 with another proximate POI. Accordingly, the process may repeat act 1117 for each POI that is a proximate POI.

During act 1119, the process may form a POI vector ($POI_{vec}$) which originates from the current location of the MS and extends to a location of a current POI. After completing act 1119, the process may continue to act 1121.

During act 1121, the process may determine whether a current POI is within the constraining area of the MS (i.e., the cone in the present example) and is thus a *presentable POI*. The process may do this, for example, by comparing an angle of the POI vector ($POI_{vec}$) with that of the target vector (i.e., vector $V_{dev}$), and then determining whether the difference between these angles is less than or equal to $\theta$ (i.e., half of the cone's overall angle). Accordingly, if an absolute value of the difference between these angles is less than or equal to a threshold value (e.g., less than or equal to $\theta$), then the process may determine that the current POI is within the constraining area and may continue to act 1123. However, if the process determines that an absolute value of the difference between these angles is greater than the threshold value (e.g., greater than $\theta$), then the process may determine that the current POI is not within the constraining area and may repeat act 1115 with a next proximate POI until all proximate POIs are examined.

During act 1123 when a proximate POI is within the constraining area (e.g., the POI is a presentable POI), the process may map information which may include POI information and other information calculated during process 1100 and render this information on a UI of the device, for example, in a graphical form within a map-based rendering of the POI, within a list form, etc. as illustratively discussed with regard to FIG. 12.

FIG. 12 shows a flow diagram that illustrates a process 1200 in accordance with an embodiment of the present system. The process 1200 may be performed using one or more computers communicating over a network. The process 1200 can include one of more of the following acts and may be referred to as a virtualization phase. Further, one or more of these acts may be combined and/or separated into sub-acts, if desired. In operation, the process may start during act 1201 and then proceed to act 1203.

During act 1203, the process may determine whether presentable POIs exist. Accordingly, if the process determines that presentable POIs exist, the process may continue to act 1205. However, if the process determines that presentable POIs do not exist, the process may continue to act 1209 where the presentation process ends.

During act 1205, the process may sort the presentable POIs using any suitable method. For example, POIs may be sorted by relevancy, location, name, distance from the MS, type of POI (e.g., restaurants, museums, airports, gas stations, service stations, zoos, historic locations, etc.). According to one method, the process may sort the POIs based on distance from the MS. Accordingly, the process may apply a nonlinear transformation, allowing POIs that fall closer to the target vector $V_{dev}$ that bisects a corresponding cone to increase in relevance. However, it is also envisioned that the MS or user may set/edit the method of sorting the POIs. After completing act 1205, the process may continue to act 1207.

During act 1207, the process may render the sorted presentable POIs on a UI of the MS for a user's convenience. In one embodiment, the POIs may be rendered in a list form and/or may be superposed upon map information.

After completing act 1207, the process may continue to act 1209 wherein the presentation process ends.

Thus, once a shape of a constraining area such as a cone is determined, POIs that fall within the cone may be selected from POIs which are located within a predetermined maximum range of the MS. The MS may then present these POIs, for example, sorted by relevance and rendered on a UI of the MS for the user's convenience. Although in one embodiment of the present system the POIs may be presented as a list, in other embodiments other suitable forms of presenting POIs may be provided. For example, graphical representations of the POIs may superimposed upon map information. Further, the POIs which are rendered may include links and/or objects that may be selected so as to provide additional information about the POI to the user. Further, when a POI is selected by a user, a pop-up box may be rendered which may provide the user with additional information about the POI. Moreover, the MS may calculate a route to one or more POIs when the user of the device requests directions to a selected POI.

Accordingly, the present system provides a novel method to select and present POIs that are within a selected area (e.g., cone) of interest which may be based upon an orientation of a device such as an MS. This method may be defined as POI-virtualization and may have one or more of the following properties:

> **Beam virtualization** - as the POI approximates the main axis, the larger the apparent distortion, or virtualization, becomes.
> **Angular virtualization** - as the POI comes closer to the device, the apparent distortion brings the POI closer still.

The present system may provide increased focus to a POI or other map feature by bringing the POI or other map feature virtually closer to a geographic virtual position of a device, such as a MS, based upon an orientation of the device. Accordingly, a user may manipulate the MS such that POIs may appear virtually closer to the user or MS. Further, the POIs listings may be sorted so that a user may virtually push POIs further away into a background of a display and/or may pulling POIs virtually closer to a user so that they may appear (e.g., be rendered within the UI) closer and in greater focus to a user.

According to the present system, a virtual filter may be provided which may include characteristics such as, for example, linear and/or non-linear filtering, convolution, masking, segmentation, and/or transformation techniques which may use geographic features and displace them to a new virtual location as defined by new coordinates (e.g., x, y, z; or latitude, longitude, and elevation) on which new feature manipulations may be performed to infer proximity to a user's device.

The present system may also deform a field by warping the shape of a map space to a new shape. Further, the present system is not limited to a two dimensional plane (2D) and the same principles can be extended into a three dimensional (3D) plane. Further, virtual POI (VPOI) may be used in conjunction with other processes that for example, filter POIs and/or other map information based on a radius away from the device or geographic location for example, Boston, San Francisco, New York.

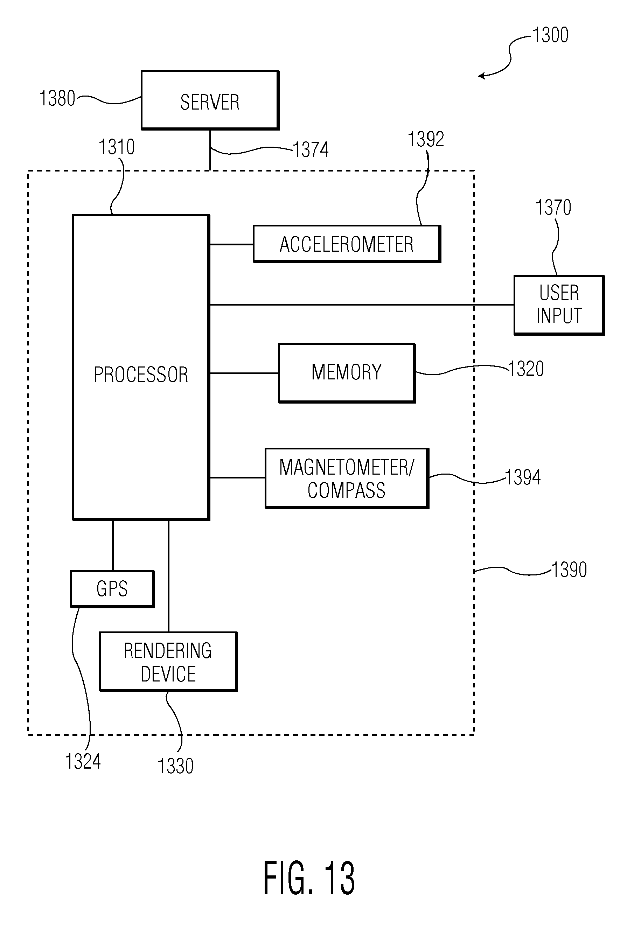

FIG. 13 shows a portion of a system 1300, including a device such as a mobile station 1390, etc. in accordance with an embodiment of the present system. For example, a portion of the present system may include a processor 1310 operationally coupled to a memory 1320, a rendering device, such as a display 1330, a magnetometer/compass 1394, an accelerometer 1392, a GPS 1324 and a user input device 1370. The memory 1320 may be any type of device for storing application data as well as other data related to the described operation. The application data and other data are received by the processor 1310 for configuring (e.g., programming) the processor 1310 to become a special purpose processor for performing operation acts in accordance with the present system. The processor 1310 so configured becomes a special purpose machine particularly suited for performing in accordance with the present system.

The operation acts may include requesting content from a server 1380, such as a POI server, operationally coupled to the MS 1390, for example through a network 1374, providing content, and/or rendering of content, such as POI content. The user input 1370 may include a keyboard, mouse, trackball or other device, including touch sensitive displays, which may be stand alone or be a part of a system, such as part of a personal computer, personal digital assistant, mobile phone, set top box, television or other device for communicating with the processor 1310 via any operable link. The user input device 1370 may be operable for interacting with the processor 1310 including enabling interaction within a UI as described herein. Clearly one or more of the processor 1310, the memory 1320, the display 1330, the magnetometer/compass 1394, the accelerometer 1392, the GPS 1324 and/or the user input device 1370 may all or partly be a portion of a computer system or other device such as a MS as described herein.

The magnetometer/compass 1394 may receive magnetic field signals such as, for example, a magnetic field of the Earth and may include one or more sensors for sensing an orientation of the MS 1390 along one or more axes (e.g., X, Y and Z axis). The accelerometer 1392 may include a one through three axis accelerometer which may, for example, sense an orientation along x, y, and z axes. The x, y, and z axes may have an orientation which corresponds with the orientation of an MS of the present system. Further, the user may virtually switch one or more axes such that a rolling of the MS may have a similar effect of the MS in one orientation may operate similar as as a pitching motion of the MS in another orientation. The GPS may receive global positioning data to enable an identification of a location of the MS, although other systems, such as triangulation from two or more devices, as may be readily appreciated may also be utilized for identifying a location of the MS 1390.

The methods of the present system are particularly suited to be carried out by a computer software program, such program containing modules corresponding to one or more of the individual steps or acts described and/or envisioned by the present system. Such program may of course be embodied in a computer-readable medium, such as an integrated chip, a peripheral device or memory, such as the memory 1320 or other memory coupled to the processor 1310.

The program and/or program portions contained in the memory 1320 configure the processor 1310 to implement the methods, operational acts, and functions disclosed herein. The memories may be distributed, for example between the MS and a POI server, or local, and the processor 1310, where additional processors may be provided, may also be distributed or may be singular. The memories may be implemented as electrical, magnetic or optical memory, or any combination of these or other types of storage devices. Moreover, the term "memory" should be construed broadly enough to encompass any information able to be read from or written to an address in an addressable space accessible by the processor 1310. With this definition, information accessible through a network is still within the memory, for instance, because the processor 1310 may retrieve the information from the network for operation in accordance with the present system.

The processor 1310 is operable for providing control signals and/or performing operations in response to input signals from the user input device 1370 as well as in response to other devices of a network and executing instructions stored in the memory 1320. The processor 1310 may be an application-specific or general-use integrated circuit(s). Further, the processor 1310 may be a dedicated processor for performing in accordance with the present system or may be a general-purpose processor wherein only one of many functions operates for performing in accordance with the present system. The processor 1310 may operate utilizing a program portion, multiple program segments, or may be a hardware device utilizing a dedicated or multi-purpose integrated circuit.

The MS 1390 may include, for example a transmitter/receiver to transmit/receive information over the network 1374 using a suitable wired and/or wireless communication method. The MS 1390, through operation of the GPS 1324 may receive position information from one or more of GPS transmitters which are also illustratively shown as the server 1380.

The network 1374 may include any suitable communication network such, as, for example, a WAN, a LAN, a proprietary network, the Internet, a cellular communication network, etc.

Accordingly, the present invention provides a system, apparatus, and method to control mobile software applications with respect to the orientation and geographic location of a device such as the MS 1390. Using the orientation of the MS, an angle of a viewing vector relative to a ground plane and a shape of a viewing area may be determined. The display, or non-display, of content (e.g., POIs) based upon the viewing area and viewing vector may then be determined for the geographic location. The magnetometer 1394 and the accelerometer 1392 may provide orientation information such as, for example, magnetic orientation, roll, pitch, and/or yaw information which may be used to determine and control rendering of POIs and/or related information on a UI of the MS 1390, for example through use of the rendering device 1330. The map information such as, for example, geographical points-of-interest may be expressed in lat, long to allow more precise content presentation based on proximity and direction. Further control over points of interest may be determined based upon a geographic position of the MS 1390 which may be determined using any suitable method such as, for example, GPS and/or triangulation. Further, using orientation information, points of interest information may be filtered and points of interest brought virtually closer to the device position to amplify an apparent position of the POI. Such amplification may be used to automatically select and/ sort POIs for a user's convenience.

Accordingly, the present system may dynamically determine points of interest to include in a map and may render the map. The present system may incorporate wired and/or wireless communication methods and may provide a user with a personalized environment. Further benefits of the present system include low cost and scalability. Moreover, the present system may change size and/or shape of a map viewing area based upon an orientation of a MS relative to another plane or planes.

Finally, the above discussion is intended to be merely illustrative of the present system and should not be construed as limiting the appended claims to any particular embodiment or group of embodiments. The present system may be provided in a form of a content rendering device, such as a MS. A further embodiment of the present system may provide a UI that operates as a browser extension, such as a rendered browser toolbar, that may overlay POIs over a browser window.

Thus, while the present system has been described with reference to exemplary embodiments, including user interfaces, it should also be appreciated that numerous modifications and alternative embodiments may be devised by those having ordinary skill in the art without departing from the broader and intended spirit and scope of the present system as set forth in the claims that follow. Further, while exemplary user interfaces are provided to facilitate an understanding of the present system, other user interfaces may be provided and/or elements of one user interface may be combined with another of the user interfaces in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:

a) the word "comprising" does not exclude the presence of other elements or acts than those listed in a given claim;

b) the word "a" or "an" preceding an element does not exclude the presence of a plurality of such elements;

c) any reference signs in the claims do not limit their scope;

d) several "means" may be represented by the same item or hardware or software implemented structure or function;

e) any of the disclosed elements may be comprised of hardware portions (e.g., including discrete and integrated electronic circuitry), software portions (e.g., computer programming), and any combination thereof;

f) hardware portions may be comprised of one or both of analog and digital portions;

g) any of the disclosed devices or portions thereof may be combined together or separated into further portions unless specifically stated otherwise;

h) no specific sequence of acts or steps is intended to be required unless specifically indicated; and

i) the term "plurality of" an element includes two or more of the claimed element, and does not imply any particular range of number of elements; that is, a plurality of elements may be as few as two elements, and may include an immeasurable number of elements.

**Claims**

1. A method of displaying geographic information on a user interface UI(504) of a mobile station MS (406, 506, 606), the method comprising acts of:

   determining a geographic location of the MS;
   calculating an orientation of MS;
   determining a position vector of the MS and a shape of a display area (791) based upon the orientation of the MS;
   obtaining map information corresponding with the geographic location of the MS;
   selecting map information which corresponds with the position vector and shape of the display area; and
   rendering the map information on the UI of the MS.

2. The method of claim 1, further comprising an act of selecting one or more points of interest POIs (792, 802, 820) which correspond with the position vector and the shape of the display area.

3. The method of one of the previous claims, wherein the act of calculating the orientation of the MS comprises an act of determining a pitch of the MS.

4. The method of one of the previous claims 1 and 2, wherein the act of calculating the orientation of the MS is calculated based upon the magnetic orientation of the MS.

5. The method of one of the previous claims, further comprising an act of selecting POIs within a geographic area of the MS and within an area corresponding with the rendered display area of the MS.

6. The method of one of the previous claims, further comprising an act of changing the shape of the rendered display area based upon the orientation of the MS.

7. A computer program stored on a computer readable memory medium, the computer program configured to implement a method for providing a user interface UI (504) on a mobile station MS (406, 506, 606) according to claim 1.

8. A system to display geographic information on a user interface UI (504) of a mobile station MS (406, 506, 606), the system comprising:

   a controller (1310) which is configured to:

      determine a geographic location of the MS,
      calculate an orientation of MS,

determine a position vector of the MS and a shape of a display area (791) based upon the orientation of the MS,
obtain map information corresponding with the geographic location of the MS, and
select map information which corresponds with the position vector and shape of the display area; and

a display (605) which is configured to render the map information on the UI of the MS.

9. The system of claim 8, wherein the controller is configured to select one or more points of interest POIs (792, 802, 820) which correspond with the position vector and the shape of the display area.

10. The system of one of the previous claims 8 and 9, further comprising an accelerometer to obtain acceleration information of the MS, wherein the controller is configured to determine a pitch component of the orientation of the MS based upon the acceleration information.

11. The system of the previous claims 8 and 9, further comprising a magnetometer which is configured to obtain magnetic orientation information of the MS, wherein the controller uses the magnetic orientation information to determine at least part of the orientation of the MS.

12. The system of one of the previous claims 8 to 11, wherein the controller is configured to select POIs within a geographic area of the MS and within an area corresponding with the rendered display area of the MS.

13. The system of one of the previous claims 8 to 12, wherein the controller is configured to change the shape of the rendered display area is based upon the orientation of the MS.

14. A mobile station (406, 506, 606) for displaying geographic information on a user interface UI(504) of said MS, and arranged to:

determine its geographic location;
calculate its orientation;
determine a position vector of the MS and a shape of a display area (791) based upon its orientation;
obtain map information corresponding with its geographic location;
select map information which corresponds with the position vector and shape of the display area; and
render the map information on the UI.

15. The mobile station of the previous claim, further arranged to change the shape of the rendered display area based upon its orientation.

100A

Rt1

Poi2

HIGHWAY

r

Poi5  y

2

E

Poi4

CURRENT
LOCATION  x

MS

Poi1

Poi3

# FIG. 1A

100B

Poi2

Poi4

Poi5

r'

MS

Poi1

Poi3

# FIG. 1B

FIG. 2A

FIG. 2B

FIG. 3A

FIG. 3B

FIG. 4

500A

M5
506

z
y x

y AXIS PLANE

359° 0

270°

UI
504

z
y x

90°

180°

## FIG. 5A

500

508

y
x
z

0

90°

270°

180°

504
UI

506
MS

## FIG. 5B

FIG. 6A

EP 2 306 151 A1

FIG. 6B

22

FIG. 7

800

802
POIs

| ✝ CHURCH OF JESUS CHRIST OF LDS |
| $ WAINWRIGHT BANK & TRUST CO |
| CAMBRIDGE BREWING COMPANY |
| BEENTOWNE COFFEE HOUSE |
| 🏛 JOHN A VOLPE TRAN TECH REF |
| BANK OF AMERICA: KENDALL |
| 🍴 STARBUCKS |
| $ BOSTON PRIVATE BANK & TRUST |
| 🍴 STARBUCKS KENDALL SQUARE |

| 📕 QUANTUM BOOKS | $ SAPERE & WALLACK |
| 👞 INSTANT SHOE REPAIR | ✝ CHURCH OF JESUS CHRIST OF LDS |
| 📕 MIT PRESS BOOKSTORE | 🍴 STARBUCKS KENDALL SQUARE |
| 🍴 STARBUCKS | 📕 QUANTUM BOOKS |
| 📕 MIT COOP | 🍴 STARBUCKS |
| $ CAMBRIDGE TRUST CO | 🍴 LEGAL SEA FOODS |
| 🍴 LEGAL SEA FOODS | 📕 PERSEUS BOOKS |
| 📕 PERSEUS BOOKS | 🍴 TOMMY DOVIC'S |
| 📕 BUMDY LIBRARY | 🍴 HUNGRY MOTHER |
| 🍴 THE BLACK SHEEP RESTAURANT & | 🍸 FLAT TOP JOHNNY'S |

820

820

## FIG. 8

FIG. 9

FIG. 10

```
         ┌─────────────────────────────┐
         │  START  ORIENTATION PHASE   │───1101
         └─────────────────────────────┘
                       │
         ┌─────────────────────────────┐
         │    OBTAIN COMPASS DATA       │───1103
         └─────────────────────────────┘
                       │
         ┌─────────────────────────────┐
         │   OBTAIN ACCELERATOR DATA    │───1105
         └─────────────────────────────┘
                       │
         ┌─────────────────────────────┐
         │      CALCULATE PITCH         │───1107
         └─────────────────────────────┘
                       │
         ┌─────────────────────────────┐
  1109───│   DETERMINE MAX. DISTANCE    │
         └─────────────────────────────┘
                       │
         ┌─────────────────────────────┐
  1111───│   DET ANGLE BASED ON PITCH   │
         └─────────────────────────────┘
                       │
            ┌────────────────┐
  1113──────│   DET BEARING   │                         1125
            └────────────────┘
                       │
  1115                 ◇                     ┌──────────────────────┐
            ╱ PROXIMATE ╲        NO          │   END ORIENTATION    │
            ╲ POIs EXIST? ╱─────────────────▶│       PHASE          │
             ╲         ╱                     └──────────────────────┘
                 │ YES   (FOR EACH POI)
                 │
                 ◇
        ╱   W/IN MAX   ╲       NO                              1117
        ╲ D (DISTANCE)? ╱─────────────
        ╲   (PHASE)    ╱
             │ YES
         ┌─────────────────────────────┐
         │    CALCULATE DEVIATION       │───1119
         └─────────────────────────────┘
                 │ YES
                 ◇
        ╱  W/IN DESIRED ╲      NO                             1121
        ╲    CONE?      ╱─────────────
             │ YES
         ┌─────────────────────────────┐
         │  CALCULATE FOR PRESENTATION  │───1123
         └─────────────────────────────┘
```

FIG. 11

1200

1201 — START

1203 — PRESENTABLE POIs ? — NO

YES

1205 — SORT POIs

1207 — RENDER LIST TO SCREEN

1209 — END

FIG. 12

1300

1380 — SERVER

1310

1374

1392

1370

ACCELEROMETER

USER
INPUT

PROCESSOR

MEMORY — 1320

MAGNETOMETER/
COMPASS — 1394

1390

GPS

RENDERING
DEVICE

1324 1330

FIG. 13

Europäisches
Patentamt

European
Patent Office

Office européen
des brevets

## EUROPEAN SEARCH REPORT

Application Number

EP 10 30 6070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 6 401 034 B1 (KAPLAN LAWRENCE M [US] ET AL) 4 June 2002 (2002-06-04)<br>* column 8, line 1 - column 9, line 29; figures 10-14 *<br>* column 11, line 33 - column 12, line 4; figure 16 *<br>* figures 1, 2 *<br>----- | 1,2,4-9, 11-15<br>3,10 | INV.<br>G01C21/20<br>G01C21/34<br>G01C21/36<br>G06F3/033<br>G06F1/16 |
| X<br><br><br>A | WO 2005/093550 A2 (APPLE COMPUTER [US]; WEHRENBERG PAUL J [US]; LEIBA AARON [US]; WILLIAM) 6 October 2005 (2005-10-06)<br>* paragraphs [0069], [0070]; figure 5A *<br>* paragraphs [0079], [0080]; figures 7A, 7B *<br>* paragraph [0084] *<br>----- | 1-3,<br>5-10,<br>12-15<br>4,11 | |
| X,P | WO 2010/065664 A1 (QUALCOMM INC [US]; HORODEZKY SAMUEL JACOB [US]; SHEYNBLAT LEONID [US];) 10 June 2010 (2010-06-10)<br>* claim 1; figure 4B *<br>* paragraphs [0053] - [0063]; figures 6-15 *<br>----- | 1-15 | |

TECHNICAL FIELDS
SEARCHED        (IPC)

G01C
G06F

The present search report has been drawn up for all claims

| Place of search | Date of completion of the search | Examiner |
|---|---|---|
| The Hague | 4 January 2011 | Kuhn, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 30 6070

This annex lists the patent family members relating to the patent documents cited in  the above-mentioned European search report.
The members are as contained in the European Patent Office EDP file on
The European Patent Office is in no way liable for these particulars which are merely given for the purpose of information.

04-01-2011

| Patent document cited in search report | | Publication date | Patent family member(s) | | Publication date |
|---|---|---|---|---|---|
| US  6401034 | B1 | 04-06-2002 | NONE | | |
| WO 2005093550 | A2 | 06-10-2005 | AU | 2005225977 A1 | 06-10-2005 |
| | | | AU | 2010202312 A1 | 24-06-2010 |
| | | | CA | 2555445 A1 | 06-10-2005 |
| | | | EP | 1721236 A2 | 15-11-2006 |
| | | | JP | 2007525775 T | 06-09-2007 |
| | | | KR | 20070007329 A | 15-01-2007 |
| WO 2010065664 | A1 | 10-06-2010 | US | 2010136957 A1 | 03-06-2010 |

EPO FORM P0459

For more details about this annex : see Official Journal of the European Patent Office, No. 12/82